# EUROPÄISCHE PATENTSCHRIFT

(11) **EP 3 697 655 B1**
(45) Veröffentlichungstag und Bekanntmachung des Hinweises auf die Patenterteilung: **31.05.2023**
(21) Anmeldenummer: 18795948.1
(22) Anmeldetag: 16.10.2018
(51) Int. Cl.: B60T 13/66, B60T 17/22, B60T 13/26

(54) **BREMS-REDUNDANZKONZEPT FÜR HOCHAUTOMATISIERTES FAHREN**
BRAKE REDUNDANCY CONCEPT FOR HIGHLY AUTOMATED DRIVING
CONCEPT DE REDONDANCE POUR UN SYSTÈME DE FREINAGE, DESTINÉ À UNE CONDUITE HAUTEMENT AUTOMATISÉE

(30) Priorität: 16.10.2017 DE 102017218488
(43) Veröffentlichungstag der Anmeldung: 26.08.2020
(73) Patentinhaber: KNORR-BREMSE Systeme für Nutzfahrzeuge GmbH, 80809 München (DE)
(72) Erfinder: HECKER, Falk, 71706 Markgröningen (DE); MUSTAPHA, Adnan, 75433 Maulbronn (DE); JUNDT, Oliver, 74394 Hessigheim (DE); WEIS, Rüdiger, 70469 Stuttgart (DE); STEINBERGER, Jürgen, 82194 Gröbenzell (DE)
(86) Internationale Anmeldenummer: PCT/EP2018/078185
(87) Internationale Veröffentlichungsnummer: WO 2019/076861

(56) Entgegenhaltungen:
- US-A1- 2013 184 957
- US-A1- 2017 267 221

## Beschreibung

Die vorliegende Erfindung bezieht sich auf eine Vorrichtung und ein Modul zur Erweiterung eines elektronisch gesteuerten Bremssystems für Fahrzeuge, insbesondere autonom geführte Nutzfahrzeuge. Weiterhin bezieht sich die Erfindung auf ein elektronisch gesteuertes Bremssystem.

Fahrzeuge, insbesondere Nutzfahrzeuge, mit hochautomatisierten Fahrfunktionen die dem Fahrer die Führungsaufgabe und -verantwortung (mindestens für eine begrenzte Zeit) abnehmen, müssen bei Auftreten eines beliebigen Fehlers die Fahrzeugführung solange fortsetzen, bis der Fahrer die Verantwortung wieder übernimmt. Die daraus abgeleitete Systemeigenschaft "Fail-Operational" erfordert, dass die Grundfunktionen insbesondere auf der Ausführungsebene, ggf. mit funktionalen Einschränkungen, weiterhin gewährleistet sind. Für die Bremssteuerung bedeutet das, dass auch bei einem beliebigen Fehler das Fahrzeug weiterhin elektronisch gesteuert gebremst werden kann, es somit redundant ausgebildet ist.

Aus dem Stand der Technik sind Ausführungsformen von elektronisch gesteuerten, insbesondere pneumatischen, Bremssystemen bekannt.

Die EP 2 398 684 B1 offenbart beispielsweise eine elektro-pneumatische Bremsanlage eines Fahrzeugs mit getrennten Druckregelkanälen.

Dokument US 2013/0184957 A1 offenbart ein Bremssystem mit pneumatischen und elektrischen Bremskomponenten sowie ein Verfahren zur Steuerung einer druckmittelbetätigten und wenigstens teilweise elektronischen Bremsanlage eines Fahrzeugs mit wenigstens zwei Achsen, Die Erfindung sieht vor, dass die Bremsdrücke für Radbremsen an einer Achse druckgesteuert erzeugt und die Bremsdrücke für Radbremsen an wenigstens einer weiteren Achse elektronisch geregelt werden.

Dokument US 2017/0267221 A1 offenbart eine elektrische Ausrüstung eines Fahrzeugs mit einer wenigstens teilweise elektrischen Brems- und Lenkeinrichtung beinhaltend eine elektrische oder elektro-mechanische Lenkeinrichtung mit oder ohne durchgehende mechanische Verbindung zwischen einem Lenkrad und einem Lenkgetriebe sowie mit einer elektronischen Lenksteuereinrichtung und einem elektrischen Lenksteller, und eine Betriebsbremseinrichtung.

Da eine Verdopplung der Elemente bestehender Bremssysteme zu teuer und aufwändig ist, sollen Redundanzkonzepte bestehende Bremssysteme insoweit erweitern bzw. ergänzen, dass eine ähnliche, unter Umständen auch eingeschränkte, Funktionalität in einem Fehlerfall im Vergleich zu einem fehlerfreien Betrieb gewährleistet ist. Für den autonomen Fahrbetrieb bedeutet dies, dass ein bestehendes Bremssystem derart erweitert werden muss, dass auch eine automatisierte Bremsung des Fahrzeugs möglich ist.

Es ist daher Aufgabe der vorliegenden Erfindung, eine Möglichkeit zu schaffen, ein bestehendes elektronisch gesteuertes Bremssystem redundant für den autonomen Fahrbetrieb zu befähigen.

Diese Aufgabe wird mittels Anspruchs 1 gelöst. Vorteilhafte Weiterbildungen sind Gegenstand der Unteransprüche.

Grundsätzlich sind elektronisch gesteuerte Bremssysteme bekannt. Diese verfügen typischerweise über ein Fußbremsmodul und Verarbeitungseinheiten (Druckregelmodule) zur Erzeugung eines pneumatischen Bremsdrucks. Das Fußbremsmodul nimmt dabei elektronisch einen Fahrerwunsch beispielsweise über ein Bremspedal auf und gibt diesen elektronisch an eine Steuervorrichtung weiter, die wiederum daraufhin die Verarbeitungseinheiten elektronisch ansteuert. Daraus generieren die Verarbeitungseinheiten elektronisch einen pneumatischen Bremsdruck. Die elektronische Generierung des Bremsdrucks wird dazu durch eine erste, insbesondere elektrische Versorgungsquelle versorgt. Das Fußbremsmodul erzeugt aus der Bewegung des Bremspedals pneumatische Steuerdrücke, auch wenn kein Fehlerfall vorliegt. In diesem Fall werden diese nicht weiter verarbeitet. Fällt die elektrische Versorgungsquelle aus, fällt das Bremssystem in eine pneumatische Rückfallebene. Die pneumatischen Steuerdrücke des Fußbremsmoduls werden nun, in einer pneumatischen Rückfallebene dazu genutzt, die Verarbeitungseinheiten anzusteuern, woraus diese Bremsdrücke generieren.

Erfindungsgemäß ist eine Vorrichtung zur Erzeugung von nicht elektrischen, insbesondere pneumatischen, Steuersignalen für ein Bremssystem, insbesondere ein elektronisch gesteuertes Bremssystem, mit einer ersten, insbesondere elektrischen, Versorgungsquelle, vorgesehen. Die Vorrichtung weist mindestens eine Schnittstelle, die dazu ausgebildet ist, mit einem Druckspeicher verbunden zu werden und mindestens eine Schnittstelle, die dazu ausgebildet ist, die Steuersignale auszugeben, auf, wobei die Vorrichtung dazu ausgebildet ist, über eine weitere Versorgungsquelle, insbesondere einen vom restlichen Bremssystem unabhängigen Batteriekreis, versorgt zu werden.

So ist vorteilhafterweise sichergestellt, dass Steuersignale zur Ansteuerung des Bremssystems auch bei Ausfall der Versorgung der Versorgungsquelle des Bremssystems, weiterhin generiert werden können, wodurch ein autonomer Fahrbetrieb weiter durchgeführt werden kann.

Vorzugsweise weist die Vorrichtung Verarbeitungsmittel, insbesondere elektronische Verarbeitungs- oder Steuermittel, auf, welche ebenfalls über die weitere Versorgungsquelle versorgt werden und die dazu ausgebildet sind, die Steuerung der Vorrichtung, und/oder des Bremssystems durchzuführen, und/oder die integral mit der Vorrichtung ausgebildet sind.

So wird vorteilhafterweise ermöglicht, dass die Vorrichtung selbstständig mittels der Verarbeitungsmittel die Steuersignale für das Bremssystem generiert.

Vorzugsweise ist an der Vorrichtung weiterhin mindestens eine Schnittstelle vorgesehen, um ein Soll-Verhalten, insbesondere eine Soll-Verzögerung des Fahrzeugs, vorzugsweise in elektronischer Form, zu erhalten.

So ist vorteilhafterweise eine Vorgabe von Soll-Werten möglich, um auch bei autonomen Fahrbetrieb eine gewünschte Verzögerung einstellen zu können. Die Vorrichtung bildet somit eine Möglichkeit, das Bremssystem auch ohne elektronische Ansteuerung mit einem Steuersignal zu beaufschlagen.

Vorzugsweise ist die Vorrichtung dazu ausgebildet, die nicht elektrischen Steuersignale, insbesondere die pneumatischen Steuersignale, elektronisch gesteuert zu erzeugen.

So kann vorteilhafterweise eine elektronische Vorgabe eines Sollverhaltens nach wie vor auch in einem Redundanzfall zu einem Bremssignal umgesetzt werden.

Erfindungsgemäß ist ein Modul zur elektronischen Erzeugung von nicht elektrischen Steuersignalen für ein Bremssystem mit einer ersten Versorgungsquelle vorgesehen. Das Modul weist mindestens eine Schnittstelle, die dazu ausgebildet ist, mit einem Druckspeicher verbunden zu werden auf. Das Modul weist mindestens eine Schnittstelle auf, die dazu ausgebildet ist, die nicht elektrischen Steuersignale, insbesondere pneumatischen Steuersignale, an mindestens eine Verarbeitungseinheit, die dazu ausgebildet ist, aus diesen nicht elektrischen Steuersignalen Bremsdrücke zur Betätigung einer Bremse zu erzeugen, zu übermitteln. Weiter ist mindestens eine Schnittstelle vorgesehen, die dazu ausgebildet ist, ein nicht elektrisches Steuersignal zu empfangen, wobei das Modul dazu ausgebildet ist, aus diesem Steuersignal die nicht elektrischen Steuersignale für das Bremssystem zu erzeugen.

So kann vorteilhafterweise ein Modul, insbesondere ein Fußbremsmodul, eines bestehenden Bremssystems erweitert werden, so dass es nicht elektrische, insbesondere pneumatische, Steuersignale vorzugsweise einer erfindungsgemäßen Vorrichtung erhält, wodurch eine Umsetzung deren Steuersignal im Bremssystem ermöglicht wird.

Vorzugsweise weist das Modul mindestens eine Schnittstelle auf, die dazu ausgebildet ist, einen Fahrerwunsch, insbesondere über ein Bremspedal, zu empfangen, wobei das Modul dazu ausgebildet ist, diesen Fahrerwunsch bei der Erzeugung der nicht elektrischen Steuersignale für das Bremssystem zu berücksichtigen.

Vorteilhafterweise kann somit auch ein Fahrer einen Fahrerwunsch in einem Redundanzfall an das Bremssystem, insbesondere an das Fußbremsmodul, übertragen, wodurch gewährleistet ist, dass auch eine Bremseingabe eines Fahrers in einem Redundanzfall noch in eine Fahrzeugverzögerung übersetzt wird.

Vorzugsweise ist das Modul dazu ausgebildet, über die zweite Versorgungsquelle versorgt werden.

Vorzugsweise weist das Modul Verarbeitungsmittel, besonders bevorzugt elektronische Verarbeitungsmittel, auf, welche ebenfalls über die weitere Versorgungsquelle versorgt werden, und die dazu ausgebildet sind, die Steuerung der Vorrichtung, und/oder des Moduls, und/oder des Bremssystems durchzuführen.

So ist in einem Redundanzfall sichergestellt, dass auch die Steuerung des Moduls und/oder der Vorrichtung und/oder des Bremssystems erfolgt, so dass weitere Funktionalitäten auch in einem Redundanzfall umsetzbar sind.

Vorzugsweise sind die Verarbeitungsmittel integral mit dem Modul ausgebildet.

Vorzugsweise weist das Modul eine erfindungsgemäße Vorrichtung auf, wobei die Schnittstelle zur Ausgabe der Steuersignale mit der Schnittstelle des Moduls zum Empfang eines Steuersignals signaltechnisch verbunden ist.

So kann vorteilhafterweise das Modul über die Vorrichtung mittels nicht elektrischer, insbesondere pneumatischer, Signale gesteuert werden.

Das Modul und die Vorrichtung sind integral oder separat ausgebildet.

Vorzugsweise sind bei integraler Ausbildung die Schnittstelle zur Ausgabe von Steuersignalen der Vorrichtung und die Schnittstelle des Moduls zum Empfang der Steuersignale identisch.

Vorzugsweise ist das Modul dazu ausgebildet, in einem Normalfall elektronisch einen Fahrerwunsch zu ermitteln und nicht elektrische Steuersignale an mindestens eine Verarbeitungseinheit, insbesondere Druckregelmodule, zur Erzeugung von Bremsdrücken zu übermitteln, die jedoch nur in einem elektrischen Fehlerfall genutzt werden.

Die Verarbeitungseinheit, insbesondere das Druckregelmodul, ist vorzugsweise dazu ausgebildet, bei Ausfall der elektrischen Versorgung, Bremsdrücke pneumatisch zu erzeugen.

Vorzugsweise ist der Fehlerfall ein Ausfall einer vorzugsweise elektrischen ersten Versorgungsquelle des Moduls.

Erfindungsgemäß ist ein elektronisches Bremssystem für ein Fahrzeug mit mindestens zwei Achsen, insbesondere ein Nutzfahrzeug, vorgesehen, das mindestens eine Verarbeitungseinheit, die dazu ausgebildet ist, aus nicht elektrischen Steuersignalen Bremsdrücke zur Betätigung einer Bremse zu erzeugen, mindestens einen nicht elektrischen, insbesondere pneumatischen, Kreis zur Übertragung von Steuersignalen an die mindestens eine Verarbeitungseinheit und mindestens einen Druckspeicher aufweist. Ferner sind Verarbeitungsmittel vorgesehen, die dazu ausgebildet sind, die Erzeugung der Bremsdrücke durch die Verarbeitungseinheiten elektronisch zu steuern, wobei die Verarbeitungsmittel durch eine erste Versorgungsquelle versorgt werden.

Weiterhin ist ein Modul vorgesehen, das mit der mindestens einen Schnittstelle zur Verbindung mit einem Druckspeicher mit mindestens einem Druckspeicher fluidisch verbunden ist, und das mit der mindestens einen Schnittstelle zur Ausgabe der nicht elektrischen, insbesondere pneumatischen, Steuersignale mit dem mindestens einen nicht elektrischen Kreis verbunden ist.

Vorzugsweise ist jeweils eine Verarbeitungseinheit, insbesondere ein Druckregelmodul, mit einem separaten nicht elektrischen, vorzugsweise pneumatischen, Kreis verbunden, und dazu ausgebildet, separat über die mindestens eine Schnittstelle zur Ausgabe der nicht elektrischen, insbesondere pneumatischen, Steuersignale des Moduls angesteuert zu werden, wobei eine Verarbeitungseinheit Bremsdrücke für eine Achse, insbesondere Bremsen einer Achse des Fahrzeugs erzeugt.

So können vorteilhafterweise pneumatische Steuersignale an die Verarbeitungseinheiten besonders bevorzugt für jede Achse separat übermittelt werden, wodurch eine zumindest achsweise Übermittlung der pneumatischen Steuersignale ermöglicht wird.

Vorzugsweise ist weiter eine Verarbeitungseinheit vorgesehen, die dazu ausgebildet ist, aus nicht elektrischen Steuersignalen Bremsdrücke zur Betätigung einer Bremse mindestens eines Anhängers zu erzeugen.

Vorzugsweise steht die Verarbeitungseinheit mit einem nicht elektrischen Kreis in Verbindung, welcher entweder ein separater Kreis ist, oder welcher mit mindestens einer weiteren Verarbeitungseinheit in Verbindung steht.

Vorzugsweise ist in dem Bremssystem weiterhin eine zweite, insbesondere elektrische, Versorgungsquelle, beispielsweise ein Batteriekreis, vorgesehen.

So wird eine zweite, redundante Energieversorgung ermöglicht.

Vorzugsweise ist mindestens ein Modulator, insbesondere ein Drucksteuerventil, vorgesehen, der in mindestens einem nicht elektrischen Kreis vorgesehen ist und der dazu ausgebildet ist, das entsprechende nicht elektrische, insbesondere pneumatische, Steuersignal an die entsprechende Verarbeitungseinheit vorzugsweise elektronisch zu modulieren.

Dieser Modulator ist vorzugsweise dazu ausgebildet, durch ein Verarbeitungsmittel elektronisch angesteuert zu werden, das durch die erste Versorgungsquelle versorgt wird, wobei er zugleich dazu ausgebildet ist, durch ein Verarbeitungsmittel elektronisch angesteuert zu werden, das durch die zweite Versorgungsquelle versorgt wird. Dadurch ist er vorteilhafterweise auch in einem Fehlerfall noch elektronisch steuerbar, wodurch eine elektronische Modulation des Steuerdrucks für Bremsen an Vorderund/oder Hinterachse und/oder Trailermodul möglich wird.

Vorzugsweise ist mindestens ein Modulator, der dazu ausgebildet ist, einen Bremsdruck, der von einer Verarbeitungseinheit erzeugt wird und der an eine Bremse übermittelt wird, elektronisch zu modulieren. Dieser steht vorzugsweise mit einer Verarbeitungseinheit und mindestens einer Radbremse fluidisch in Verbindung.

Dieser Modulator ist vorzugsweise dazu ausgebildet, durch ein Verarbeitungsmittel elektronisch angesteuert zu werden, das durch die erste Versorgungsquelle versorgt wird, wobei er zugleich dazu ausgebildet ist, durch ein Verarbeitungsmittel elektronisch angesteuert zu werden, das durch die zweite Versorgungsquelle versorgt wird.

So wird vorteilhafterweise erreicht, dass der Bremsdruck, der vorzugsweise achsweise, besonders bevorzugt an die einzelnen Bremsen übermittelt wird, oder in einer Kombination daraus auch in einem Fehlerfall noch elektronisch gesteuert modulierbar ist.

Bei radindividuell vorgesehenen Modulatoren ist auch in einem Fehlerfall noch eine radindividuelle Steuerung des Bremsdrucks möglich, wodurch sich in der Regel keine funktionelle Einschränkung des Bremssystems in einem Fehlerfall einstellt. Vorzugsweise weist das Bremssystem weiter eine erfindungsgemäße Vorrichtung auf, die mit ihrer mindestens einen Schnittstelle zur Ausgabe des Steuersignals für das Bremssystem mit der mindestens einen Schnittstelle des erfindungsgemäßen Moduls, insbesondere des Fußbremsmoduls, vorzugsweise dem Steuereingang, in Verbindung steht.

Weiter steht die Vorrichtung mit der mindestens einen Schnittstelle mit einem Druckspeicher fluidisch in Verbindung.

Vorzugsweise sind Verarbeitungsmittel, insbesondere elektronische Verarbeitungsmittel, vorgesehen, die dazu ausgebildet sind, die Erzeugung der Bremsdrücke elektronisch zu steuern. Vorzugsweise sind die Verarbeitungsmittel dazu ausgebildet, die Steuerung der Vorrichtung und/oder der Modulatoren elektronisch durchzuführen, wobei die Vorrichtung und/oder die Verarbeitungsmittel dazu ausgebildet sind, durch die weitere Versorgungsquelle versorgt zu werden und/oder um ein Soll-Verhalten, vorzugsweise eine Soll-Verzögerung in einem Fehlerfall zu empfangen und daraufhin das System zu steuern.

Erfindungsgemäß weist das elektronische Bremssystem mindestens eine Schnittstelle auf, die dazu ausgebildet ist, Raddrehzahlen mindestens eines Rades zu erfassen, wobei das Bremssystem dazu ausgebildet ist, die Erzeugung der Bremsdrücke unter Berücksichtigung der erfassten Raddrehzahlen, insbesondere durch die Verarbeitungsmittel, durchzuführen.

Die Raddrehzahlen werden dabei vorteilhafterweise zu einem Teil, besonders bevorzugt zur Hälfte, durch Raddrehzahlsensoren erfasst, die durch die erste Versorgungsquelle versorgt werden, wobei der andere Teil, bevorzugt die andere Hälfte, durch Raddrehzahlsensoren erfasst wird, die durch die zweite Versorgungsquelle versorgt werden. So stehen auch bei Ausfall einer Versorgungsquelle immer noch Drehzahlsignale zur Verfügung, um eine Bremsregelung auf Basis dieser Werte durchführen zu können.

Vorzugsweise wird mindestens eine Raddrehzahl pro Achse des Fahrzeugs bzw. mindestens eine Raddrehzahl eines Anhängers durch einen Sensor erfasst, der durch die erste Versorgungsquelle versorgt ist, und mindestens eine Raddrehzahl pro Achse des Fahrzeugs bzw. mindestens eine Raddrehzahl eines Anhängers durch einen Sensor erfasst, der durch die zweite Versorgungsquelle versorgt ist.

Erfindungsgemäß weist das elektronische Bremssystem Verarbeitungsmittel, welche durch die erste Versorgungsquelle versorgt werden, und Verarbeitungsmittel, welche durch die zweite Versorgungsquelle versorgt werden, auf, wobei beide Verarbeitungsmittel über die mindestens eine Schnittstelle Raddrehzahlen des mindestens eines Rades erfassen.

So ist vorteilhafterweise sichergestellt, dass auch in einem Fehlerfall, in dem eine Versorgungsquelle, insbesondere die erste Versorgungsquelle, ausgefallen ist, trotzdem noch alle Raddrehzahlsignale zur Verfügung stehen.

Mit der zuvor beschriebenen Vorrichtung, dem Modul und dem elektronischen Bremssystem ist es nun möglich, ein redundantes elektronisch gesteuertes Bremssystem auszubilden. Es können jedoch weitere Ausführungsformen erhalten werden, indem mindestens zwei zuvor beschriebene Merkmale miteinander kombiniert werden.

Die vorliegende Anmeldung offenbart ein redundantes elektronisch gesteuertes Bremssystem, in dem teilweise nicht elektrische Steuersignale zur Steuerung von Komponenten verwendet werden. Da sich die Anmeldung mit der Weiterbildung eines elektronischen Bremssystems für Nutzfahrzeuge beschäftigt, welches typischerweise über eine pneumatische Rückfallebene verfügt, sind die nicht elektrischen Steuersignale insbesondere pneumatisch ausgebildet. Auch ein Druckspeicher ist daher als pneumatischer Druckspeicher, also Druckluftspeicher anzusehen.

Es sind jedoch zudem Ausführungsformen denkbar, welche ein anderes gasförmiges Medium als Luft zur Signalübertragung nutzen, oder welche Signale stattdessen auf hydraulischem Wege übertragen.

Die Redundanz des beschriebenen Bremssystems wird dadurch erreicht, dass auch bei einem Ausfall der ersten Versorgungsquelle des Bremssystems noch weitere versorgte Elemente vorhanden sind, welche nach wie vor eine Steuerung, wenn auch eingeschränkt, ermöglichen. Durch die Verwendung von zwei Drucksteuerventilen ist es möglich, eine achsweise elektronisch gesteuerte Regelung der Bremsdrücke zu realisieren, werden weitere Drucksteuerventile hinzugefügt, können auch eine radindividuelle Regelung oder eine Regelung für einen Anhänger in Form einer Stotterbremse umgesetzt werden.

Die Regelverfahren können beispielsweise nach verschiedenen Ansätzen betrieben werden, welche je nach Fahrsituation ausgewählt gewechselt werden können. In einem "Select-Smart" Regelverfahren ist es möglich einen möglichst kurzen Bremsweg durch eine Bremsung des Redundanzsystems zu realisieren. Dabei wird der Bremsdruck auf Basis der empfangenen Raddrehzahlsignale vorzugsweise achsweise derart elektronisch geregelt, dass sich eine möglichst hohe Verzögerung des Fahrzeugs einstellt. Die Räder werden dabei so abgebremst, dass sie nahe an der Blockiergrenze gehalten werden, an der das Rad ohne weiter abzurollen über die Fahrbahn rutschen würde. Im Gegensatz dazu kann mit einem "Select-Low" Regelverfahren optimale Stabilität während der Bremsung erreicht werden. Dabei wird der Bremsdruck auf Basis der empfangenen Raddrehzahlsignale vorzugsweise achsweise derart elektronisch geregelt, dass sich eine möglichst stabile Bremsung des Fahrzeugs einstellt. Die Räder werden dazu vorzugsweise so abgebremst, dass sie möglichst nicht an die Blockiergrenze kommen. Zudem kann darauf geachtet werden, dass beispielsweise immer die Vorderachse vor der Hinterachse überbremst wird, also die Vorderachse zuerst zu blockieren beginnt. Die Auswahl der achsweisen Regelverfahren ist vorzugsweise abhängig von der Fahrsituation: "Select-Smart" wird vorzugsweise bei stabiler Fahrt zum Erzielen möglichst kurzer Bremswege und "Select-Low" vorzugsweise bei instabiler Fahrt, bei der beispielsweise ein Ausbrechen des Fahrzeugs verhindert werden soll, angewandt.

Im Folgenden erfolgt die Beschreibung der Erfindung anhand bevorzugter Ausführungsbeispiele unter Bezugnahme auf die beigefügten Zeichnungen.

Im Einzelnen zeigt:
- Fig. 1: eine Ansicht eines erfindungsgemäßen elektronischen Bremssystems (EBS).
- Fig. 2: eine Weiterbildung des elektronischen Bremssystems aus Fig. 1.
- Fig. 3: eine Ansicht eines erfindungsgemäßen elektronischen Bremssystems (EBS).
- Fig. 4: eine Weiterbildung des elektronischen Bremssystems aus Fig. 3.
- Fig. 5: eine weitere Ausführungsform eines erfindungsgemäßen elektronischen Bremssystems (EBS).
- Fig. 6: eine weitere Ausführungsform eines erfindungsgemäßen elektronischen Bremssystems (EBS).

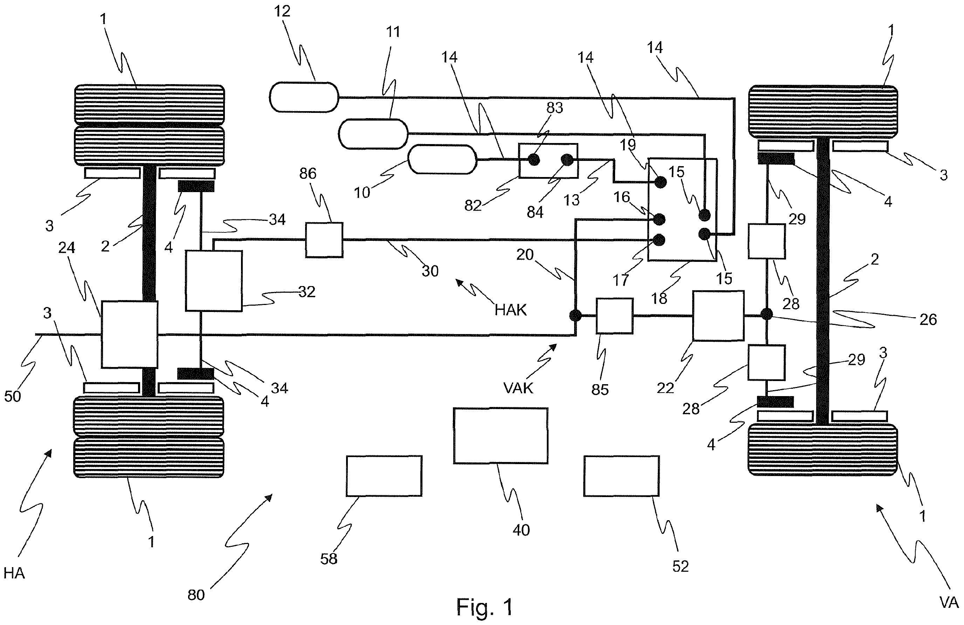

**Fig. 1** zeigt eine Ansicht eines erfindungsgemäßen elektronischen Bremssystems 80 (EBS). Es ist eine Vorderachse VA und eine Hinterachse HA gezeigt, welche jeweils über Räder 1 verfügt, die an einer Achse 2 drehbar befestigt sind. Den Rädern 1 ist jeweils eine Bremseinrichtung zugeordnet, die in dem gezeigten Beispiel als Reibungsbremse ausgeführt ist. Dazu ist an jedem Rad 1 eine Bremsscheibe 3 vorgesehen, welche dazu ausgebildet ist, mit einem Reibpartner, in diesem Fall einem Bremsbelag 4, reibend in Kontakt zu treten. Die Bremsscheibe 3 ist drehfest mit dem jeweiligen Rad 1 verbunden und dreht sich somit während der Fahrt mit dem Rad 1 mit.

Zur Ausführung einer Bremsung wird der jeweilige Bremsbelag 4 mit der entsprechenden Bremsscheibe 3 durch einen eingebrachten Bremsdruck in Kontakt gebracht, wodurch sich eine Reibkraft an der Bremsscheibe 3 einstellt, die ein bremsendes Moment zur Folge hat, welches der Drehbewegung der Bremsscheibe 3 und insbesondere des Rades 1 entgegenwirkt.

Auf die Darstellung weiterer Komponenten des Fahrzeugs und insbesondere des Achsaufbaus bzw. des Aufbaus der Bremsen, wurde in dieser Darstellung aus Gründen der Übersichtlichkeit verzichtet.

Weiterhin ist ein derartiger Brems- und Fahrzeugaufbau nicht beschränkend für den Gegenstand der Erfindung anzusehen. Er dient lediglich als Beispiel, um die Wirkungsweise des erfindungsgemäßen Gegenstands zu verdeutlichen. Vielmehr sind auch alternative Aufbaumöglichkeiten einer Bremse denkbar, wie beispielsweise einer Trommelbremse anstelle der gezeigten Scheibenbremse. Auch weitere Ausführungen eines Fahrzeugs sind denkbar. So könnten beispielsweise mehr als eine Vorder- oder Hinterachse VA, HA vorgesehen sein.

Weiterhin sind mehrere Komponenten eines elektronischen Bremssystems gezeigt, wie es bei Fahrzeugen, insbesondere Nutzfahrzeugen, zur Durchführung der Abbremsung des Fahrzeugs eingesetzt wird.

Es sind ein erster Druckspeicher 10, ein zweiter Druckspeicher 11 und ein dritter Druckspeicher 12 gezeigt, die zur Speicherung von Druckluft vorgesehen sind. Diese stehen über Versorgungsleitungen (nicht dargestellt) mit Druckregelmodulen 22, 24, 32 in Verbindung und versorgen diese mit Druckluft. Bei den Druckregelmodulen 22, 24, 32 handelt es sich beispielsweise um ein einkanaliges elektropneumatisches Druckregelmodul 22, einen zweikanaliges elektropneumatisches Druckregelmodul 32 und ein Trailermodul 24 für einen möglichen Anhängerbetrieb. Weiterhin sind an der Vorderachse VA Drucksteuerventile (Modulatoren) 28 vorgesehen, welche über eine Leitung 26 mit dem Druckregelmodul 22 in Verbindung stehen. Bremsdrücke werden durch das Druckregelmodul 22 über die Leitung 26 für die Vorderachse VA und anschließend radindividuell durch die Drucksteuerventile 28 über die Leitungen 29 sowie durch das Druckregelmodul 32 radindividuell über die Leitungen 34 für die Hinterachse HA generiert. Das Trailermodul 24 generiert für einen möglicherweise vorhandenen Anhänger Bremsdrücke und übermittelt diese über die Leitung 50.

Weiterhin ist eine Vorrichtung 82 gezeigt, welche mit einer Schnittstelle 83 über eine Versorgungsleitung 14 mit einem Druckspeicher 10 fluidisch in Verbindung steht. Die gezeigte Vorrichtung 82 ist dazu ausgebildet, aus Druckluft des Druckspeichers 10 pneumatische Steuersignale, insbesondere bei autonomen Fahrbetrieb des Fahrzeugs, für das Bremssystem 80 zu erzeugen. Diese können dem Bremssystem 80 über eine weitere Schnittstelle 84 der Vorrichtung 82 zur Verfügung gestellt werden.

Zu diesem Zweck ist die Schnittstelle 84 über eine Steuerleitung 13 mit einem Steuereingang eines Fußbremsmoduls 18 verbunden. Das Fußbremsmodul 18 verfügt beispielsweise zudem über eine Schnittstelle (nicht dargestellt) zu einem Fahrer, um dessen Eingaben, insbesondere Bremseingaben, zu empfangen.

Das Fußbremsmodul 18 weist zudem Eingänge auf, die dazu ausgebildet sind, über Steuerleitungen 14 Druckluft aus dem zweiten Druckspeicher 11 und dem dritten Druckspeicher 12 zu empfangen. Das Fußbremsmodul 18 ist dazu ausgebildet, aus Steuereingaben eines Fahrers und/oder aus Steuersignalen, welche über die den Steuereingang 19 empfangen werden, pneumatische Steuersignale für das Bremssystem 80 zu erzeugen. Die Steuersignale sind in der gezeigten Ausführungsform für ein zweikreisiges Bremssystem 80 ausgebildet.

Der erste Kreis, der Vorderachskreis VAK, wird über einen Ausgang 16 des Fußbremsmoduls 18 mit pneumatischen Steuersignalen versorgt. Der erste Kreis wird dabei gebildet durch die Steuerleitung 20, welche sich zur Vorderachse VA und zum Trailermodul 24 verzweigt, das Druckregelmodul 22, die Leitung 26, welche sich zu beiden Rädern 1 der Vorderachse VA verzweigt, den Drucksteuerventilen 28, den Leitungen 29, dem Trailermodul 24 sowie der Leitung 50. Im ersten Kreis ist nach der Verzweigung der Steuerleitung 20 in Richtung der Vorderachse VA vor dem Druckregelmodul 22 ein Drucksteuerventil 85 vorgesehen, das dazu ausgebildet ist, den pneumatischen Steuerdruck an das Druckregelmodul 22 zu modulieren.

Der zweite Kreis, der Hinterachskreis HAK, wird über einen Ausgang 17 des Fußbremsmoduls 18 mit pneumatischen Steuersignalen versorgt. Der zweite Kreis wird dabei gebildet durch die Steuerleitung 30, das Druckregelmodul 32 sowie die Leitungen 34. Zudem ist zwischen dem Ausgang 17 und dem Druckregelmodul 32 in der Steuerleitung 30 ein Drucksteuerventil 86 vorgesehen, das dazu ausgebildet ist, den pneumatischen Steuerdruck an das Druckregelmodul 32 zu modulieren.

Weiterhin ist eine Steuervorrichtung 40, beispielweise ein elektronisches Steuergerät, vorgesehen, welches mit Elementen des EBS 80 elektronisch in Verbindung steht und zur elektronischen Steuerung des EBS 80 ausgebildet ist. Als Grundlage für die elektronische Steuerung erhält die Steuervorrichtung 40 beispielsweise einen Sollwert, beispielsweise eine Soll-Verzögerung, des Fahrzeugs. Auf die Darstellung der elektronischen Verbindungen wurde aus Gründen der Übersichtlichkeit in allen Zeichnungen verzichtet. Dieser elektronisch gesteuerte Teil des EBS 80 wird über eine erste Versorgungsquelle 52, welche die Energieversorgung, beispielsweise als Batteriekreis, übernimmt, versorgt.

Im Einzelnen steht die Steuervorrichtung 40 mit dem Fußbremsmodul 18, den Druckregelmodulen 22, 24, 32 und den Drucksteuerventilen 28 in Verbindung und erhält von diesen Informationen zum Zustand bzw. Betrieb des Bremssystems 80 bzw. es kann diese steuern. Die Steuervorrichtung 40 bildet mit diesen Komponenten des gezeigten EBS 80 eine elektronische Steuerebene, welche über eine erste Versorgungsquelle 52 versorgt wird. Die Drucksteuerventile 28 werden dabei nicht durch die erste Versorgungsquelle 52 versorgt, sondern werden lediglich durch Steuersignale aktiviert und sind ansonsten passiv ausgebildet.

Weiterhin ist eine zweite Versorgungsquelle 58 vorgesehen, welche die Vorrichtung 82 versorgt. Dies bedeutet, dass die Vorrichtung 82 unabhängig von der ersten Versorgungsquelle 52 versorgt wird. Die Vorrichtung 82, die Drucksteuerventile 85, 86 und die zweite Versorgungsquelle 58 bilden den elektronisch gesteuerten Teil einer Redundanzebene des EBS 80.

Das EBS 80 verfügt zudem über die Möglichkeit, Drehzahlsignale der Räder 1 zu ermitteln. Dies kann beispielsweise über Drehzahlsensoren (nicht dargestellt) erfolgen, welche radindividuell die Raddrehzahl ermitteln.

Diese Drehzahlsignale werden beispielsweise elektronisch an die Steuervorrichtung 40 oder weitere geeignete Elemente des EBS 80 übertragen, um die Bremsdrücke entsprechend eines sich einstellenden Radschlupfs einstellen zu können.

Das EBS 80 ist dabei so ausgebildet, dass ein Teil der Raddrehzahlen, beispielsweise mindestens ein Signal pro Achse, durch Sensoren bzw. Elemente wie Verarbeitungsmittel ermittelt wird, welche durch die erste Versorgungsquelle 52 versorgt werden, und ein anderer Teil der Raddrehzahlen, beispielsweise mindestens ein Signal pro Achse, durch Sensoren bzw. Elemente wie Verarbeitungsmittel ermittelt wird, welche durch die zweite Versorgungsquelle 58 versorgt werden. So ist eine redundante Ausprägung des EBS 80 sichergestellt und es können auch bei Wegfall einer Versorgungsquelle 52, 58 immer noch Raddrehzahlen von allen Achsen des Fahrzeugs ermittelt werden.

Das EBS 80 verfügt über eine pneumatische Rückfallebene, für den Fall, dass die Versorgung aus der ersten Versorgungsquelle 52 nicht mehr gewährleistet ist. Dazu geben die Druckregelmodule 22, 24, 32, das Fußbremsmodul 18 und die Drucksteuerventile 28 bei Wegfall der ersten Versorgungsquelle 52 ihre pneumatische Rückfallebene frei. D.h. sie sind dazu ausgebildet, pneumatische Steuersignale zu empfangen bzw. zu generieren, um so weiterhin einen Betrieb des EBS 80 sicherzustellen.

Das Fußbremsmodul 18 ist dazu ausgebildet, aus Fahrereingaben oder aus Steuersignalen, welche über den Steuereingang 19 empfangen werden, mittels der Druckluft aus den Druckspeichern 11, 12 pneumatische Steuersignale für die beiden oben beschriebenen Kreise VAK, HAK zur Verfügung zu stellen. Diese werden auch in einem Normalfall durch das Fußbremsmodul 18 ausgegeben, allerdings in den Druckregelmodulen 22, 24, 32 nicht weiter verarbeitet.

Die Druckregelmodule 22, 24, 32 sind dazu ausgebildet, bei einem Ausfall der ersten Versorgungsquelle 52, aus den empfangenen pneumatischen Steuerdrücken mittels der Druckluft aus den Druckspeichern 11, 12 Bremsdrücke zu generieren.

Die Drucksteuerventile 28 verfügen ebenfalls über eine pneumatische Rückfallebene und wirken beispielsweise begrenzend auf den Bremsdruck in Leitung 26, oder lassen diesen unverändert in die Leitungen 29 durch.

Nach der Beschreibung des grundsätzlichen Aufbaus des EBS 80 erfolgt nun im Weiteren die Beschreibung der Funktionsweise des EBS 80.

Im Normalfall, also bei fehlerfreiem Betrieb, werden Fahrereingaben, oder Eingaben einer Steuervorrichtung 40 bei autonomen Fahrbetrieb, durch das Fußbremsmodul 18 empfangen und elektronisch durch die Steuervorrichtung 40 verarbeitet. Die Steuervorrichtung 40 ermittelt daraus Bremsdrücke für die einzelnen Achsen VA, HA sowie für einen angekuppelten Anhänger. Diese Bremsdrücke werden elektronisch an die Druckregelmodule 22, 24, 32 übermittelt, woraus diese Bremsdrücke, wie oben beschrieben, mit Hilfe der Druckluft aus den Druckspeichern 11, 12 generieren.

Das gezeigte Bremssystem 80 ist dazu ausgebildet, im Normalfall die aufgebrachten Bremsdrücke über die Druckregelmodule 22, 24, 32 und unter Berücksichtigung der Raddrehzahlen elektronisch gesteuert derart zu modulieren, dass das Fahrzeug bei einer Bremsung einerseits fahrdynamisch stabil gehalten wird und andererseits eine möglichst hohe Verzögerung auf das Fahrzeug aufgebracht wird, so dass sich ein möglichst kurzer Bremsweg einstellt.

Im Weiteren erfolgt die Beschreibung der Funktionsweise des EBS 80 bei Auftreten eines Fehlerfalls, genauer, bei Ausfall der ersten Versorgungsquelle 52.

Fällt beispielsweise die elektrische Versorgung aus der Versorgungsquelle 52 aus, so ist eine elektronische Steuerung des EBS 80, wie oben beschrieben, nicht mehr möglich. Die Druckregelmodule 22, 24, 32 und das Fußbremsmodul 18 geben dann ihre pneumatische Rückfallebene frei.

Weiterhin wird jedoch die Vorrichtung 82 durch die zweite Versorgungsquelle 58 versorgt, die die beiden Drucksteuerventile 85, 86 elektronisch ansteuert, wodurch weiterhin ein elektronisch gesteuerter Betrieb des EBS 80, wenn auch mit eingeschränkter Funktionalität, möglich ist.

Die Vorrichtung 82 erstellt elektronisch gesteuert bei autonomen Fahrbetrieb aus Soll-Vorgaben, beispielsweise einer Soll-Verzögerungen, unter Zuhilfenahme von Druckluft aus dem ersten Druckspeicher 10, pneumatische Steuersignale für eine Abbremsung des Fahrzeugs. Die elektronische Steuerung kann dabei durch ein Steuermittel erfolgen, das die Vorrichtung 82 aufweist, oder das mit der Vorrichtung 82 signaltechnisch in Verbindung steht.

Das generierte pneumatische Steuersignal wird über die Steuerleitung 13 an den Steuereingang 19 des Fußbremsmoduls 18 übermittelt. Das Fußbremsmodul 18 generiert aus diesem Steuersignal pneumatische Steuersignale bzw. Steuerdrücke und übermittelt diese an die beiden Steuerleitungen 20, 30. Weiterhin generiert das Fußbremsmodul 18 auch pneumatische Steuersignale aus Fahrereingaben beispielsweise über ein Bremspedal.

In den beiden Kreisen VAK, HAK, werden die pneumatischen Steuersignale von den Drucksteuerventilen 85, 86 empfangen. Diese modulieren nun die empfangenen Steuersignale, elektronisch gesteuert durch die Vorrichtung 82.

Dabei erfolgt die Modulierung der pneumatischen Steuersignale auf Basis der empfangenen Raddrehzahlen, welche auch in einem Fehlerfall, zumindest teilweise noch zur Verfügung stehen. Aufgrund der Anordnung der Drucksteuerventile 85, 86 kann die Modulation in der dargestellten Ausführungsform achsweise für Vorderachse VA und Hinterachse HA erfolgen. Eine radindividuelle Modulation ist in dieser Rückfallebene nicht möglich. Auf diese Weise kann das Fahrzeug auch in einem Fehlerfall noch elektronisch gesteuert gebremst bzw. stabilisiert werden.

In der gezeigten Ausführungsform ist der Bremsdruck für einen Anhänger, welcher mit Bremsdruck über die Leitung 50 versorgt wird, nicht durch ein vorgeschaltetes Drucksteuerventil 85, 86 beeinflusst. D.h. in dieser Ausführungsform kann bei einem Ausfall der ersten Versorgungsquelle 52 keine Beeinflussung des Bremsdrucks eines Anhängers umgesetzt werden, wodurch sich Nachteile hinsichtlich Fahrstabilität und Bremsweg ergeben können.

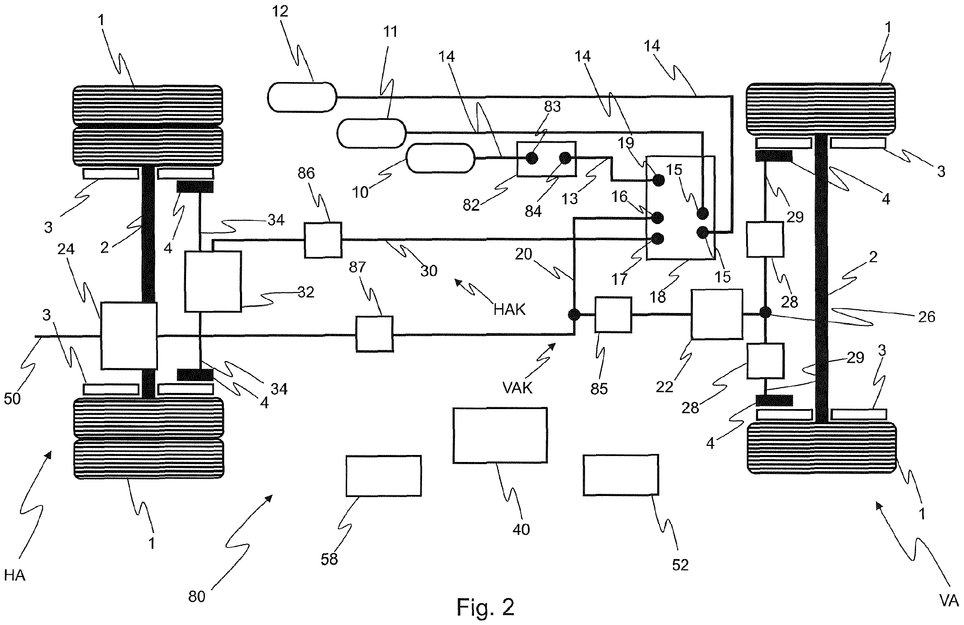

**Fig. 2** zeigt eine Weiterbildung des elektronischen Bremssystems 80 aus Fig. 1.

Im Unterschied zu der Ausführung in Fig. 1 wurde hier in die Steuerleitung 20 auch in dem sich zum Trailermodul 24 verzweigenden Abschnitt vor das Trailermodul 24 ein Druckregelventil 87 vorgesehen, das ebenfalls durch ein Verarbeitungsmittel, beispielsweise die Vorrichtung 82, elektronisch gesteuert wird, wobei diese durch die zweite Versorgungsquelle 58 versorgt wird. Der Aufbau und die Funktionsweise des übrigen Bremssystems 80 sind im Wesentlichen identisch zu der Ausführungsform aus Fig. 1.

Durch das Druckregelventil 87 vor dem Trailermodul 24 ist es nun möglich, auch den Steuerdruck elektronisch zu modulieren, der an das Trailermodul 24 übermittelt wird. So kann beispielsweise ein Blockieren der Räder eines Anhängers, welcher einen Bremsdruck über die Leitung 50 erhält, verhindert werden, indem der Steuerdruck durch das Druckregelventil vor dem Trailermodul 24 entsprechend reduziert wird. Gleichzeitig wird jedoch der Steuerdruck, der über die Steuerleitung 20 an die Vorderachse VA geleitet wird, nicht dadurch beeinflusst, da hier der Steuerdruck durch das Druckregelmodul 85 unabhängig davon moduliert wird.

So kann in einer pneumatischen Rückfallebene des gezeigten Bremssystems 80 eine achsweise Realisierung einer ABS-Funktion für das Fahrzeug und eine Realisierung einer Stotterbremse für einen Anhänger erfolgen.

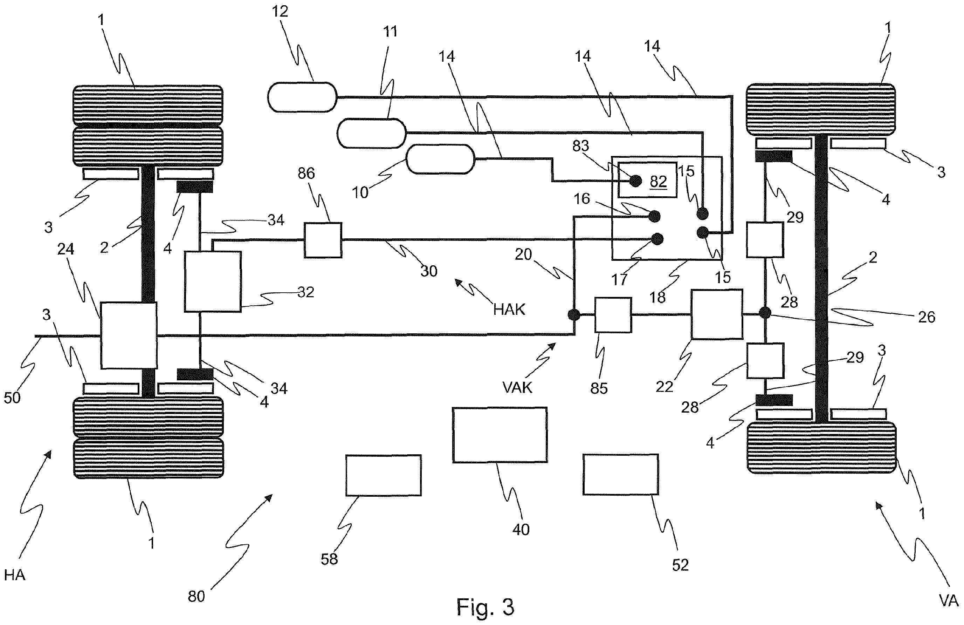

**Fig. 3** zeigt ein elektronisches Bremssystem 80, bei dem die Vorrichtung 82 in das Modul 18 integriert wurde.

Auf diese Weise können Steuerleitungen 13 zwischen der Vorrichtung 82 und dem Modul 18 verkürzt werden oder sogar entfallen, wodurch sich kürzere Ansprechzeiten bei der Umsetzung der Steuersignale der Vorrichtung 82 durch das Modul 18 ergeben. Zudem kann das Bremssystem 80 dadurch auch in seiner Komplexität reduziert werden.

Der weitere Aufbau sowie die Funktionsweise des Bremssystems 80 entsprechen im Wesentlichen der Ausführungsform aus Fig. 1, weshalb hier nicht weiter auf dieses Ausführungsform eingegangen wird.

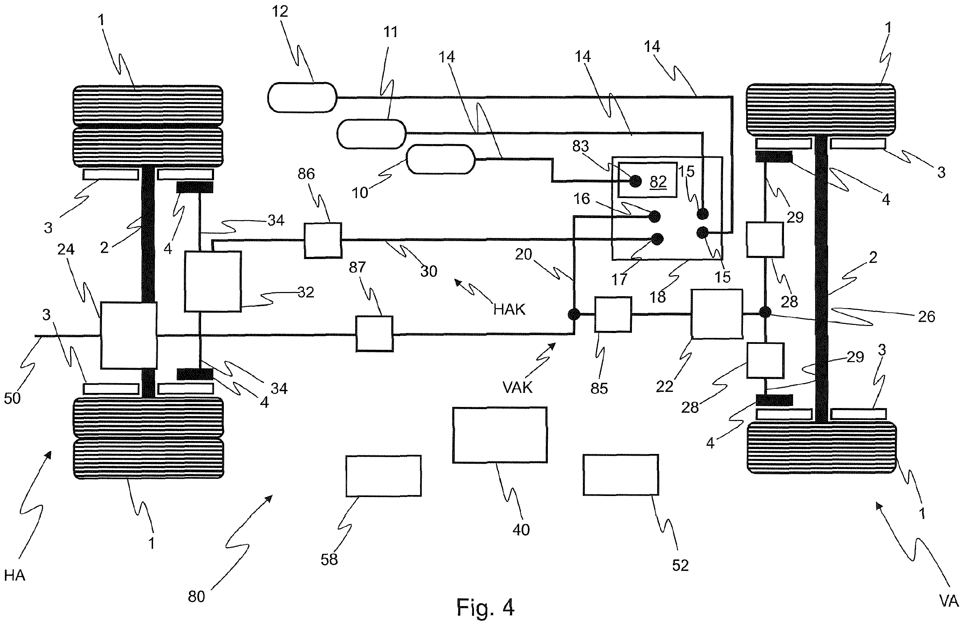

**Fig. 4** zeigt eine Weiterbildung des Bremssystems 80 aus Fig. 3.

Im Unterschied zur Ausführungsform aus Fig. 3 wurde hier, genau wie in Fig. 2, ein zusätzlicher Modulator 87 in den zum Trailermodul 24 verzweigenden Teil der Steuerleitung 20 eingefügt, wodurch auch hier eine Möglichkeit geschaffen wird, den Steuerdruck an das Trailermodul 24 zu verändern, wodurch eine Stotterbremse für einen Anhänger realisiert werden kann.

Der weitere Aufbau sowie die Funktionsweise des Bremssystems 80 entsprechen im Wesentlichen der Ausführungsform aus Fig. 3, weshalb hier nicht weiter auf dieses Ausführungsform eingegangen wird.

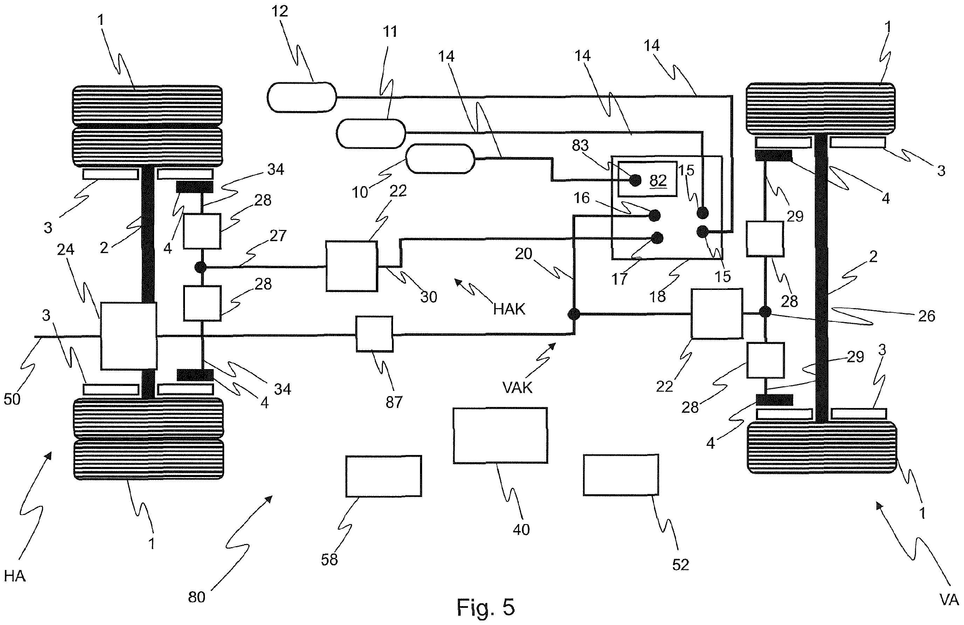

**Fig. 5** zeigt eine weitere Ausführungsform des erfindungsgemäßen elektronischen Bremssystems 80.

Anstelle des Druckregelmoduls 32, welches Bremsdrücke an beide Leitungen 34 zur Verfügung stellt, wurde hier an der Hinterachse HA der gleiche Aufbau wie an der Vorderachse VA vorgesehen. Ein weiteres Druckregelmodul 22 erhält nun über die Steuerleitung 30 pneumatische Steuersignale aus dem Ausgang 17 des Moduls 18. Das Druckregelmodul 22 ist dazu ausgebildet, auf Basis der Steuersignale aus dem Ausgang 17 Bremsdrücke zu erstellen, welche über die sich verzweigende Leitung 27 an die Drucksteuerventile 28 übermittelt werden. Die Drucksteuerventile 28 sind dazu ausgebildet, die Bremsdrücke an die Leitungen 34 derart moduliert weiterzugeben, um die Bremsen der Räder 1 entsprechend zu betätigen.

Im Übrigen wurde auf die Drucksteuerventile 85, 86 verzichtet, die zur Modulation des pneumatischen Steuersignals in den Leitungen 20, 30 vorgesehen waren.

Stattdessen werden nun die Drucksteuerventile 28 dazu verwendet. Dazu werden diese durch ein Verarbeitungsmittel, welches beispielsweise in der Vorrichtung 82 vorgesehen ist und welches durch die zweite Versorgungsquelle 58 versorgt ist, zusätzlich zu einem ersten Verarbeitungsmittel, beispielsweise der Steuervorrichtung 40, welche durch die erste Versorgungsquelle 52 versorgt wird, elektronisch angesteuert.

Das Bremssystem 80 ist dazu ausgebildet, in einem Fehlerfall durch Verarbeitungsmittel der Vorrichtung 82 oder des Moduls 18 elektronisch gesteuert zu werden. Diese werden durch die zweite Versorgungsquelle 58 elektrisch versorgt.

So können die Verarbeitungsmittel, welche in einem Fehlerfall noch versorgt werden, die Drucksteuerventile 28 zur Modulation des Bremsdrucks in den Leitungen 29, 34 ansteuern und somit eine radindividuelle Steuerung des Bremsdrucks vornehmen.

In dieser Ausführungsform kann daher auf die Drucksteuerventile 85, 86 verzichtet werden. Zur Umsetzung einer Stotterbremse an einem Anhänger würde in dieser Ausführungsform das Drucksteuerventil 87 zur Modulation des Steuerdrucks für das Trailermodul 24, vergleichbar zu den Ausführungsformen aus Fig. 2 und Fig. 4, vorgesehen.

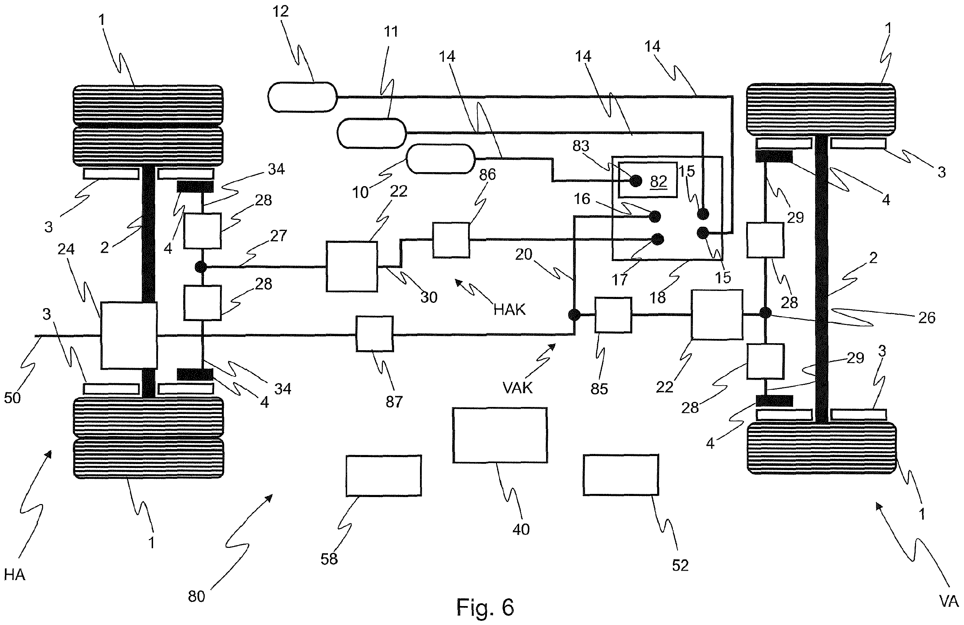

**Fig. 6** zeigt eine weitere Ausführungsform des erfindungsgemäßen elektronischen Bremssystems 80.

Der Aufbau des gezeigten Bremssystems 80 ist im Wesentlichen vergleichbar mit dem Aufbau des Bremssystems 80 aus Fig. 5. Allerdings werden hier die Drucksteuerventile 28 nicht durch Verarbeitungsmittel, welche durch die zweite Versorgungsquelle 58 versorgt sind, angesteuert, sondern durch Verarbeitungsmittel, welche durch die erste Versorgungsquelle 52 versorgt sind. D.h eine radindividuelle Modulation des Bremsdrucks durch die Drucksteuerventile 28 ist bei einem Ausfall der ersten Versorgungsquelle 52 nicht mehr möglich.

Daher sind in dieser Ausführungsform Verarbeitungsmittel, welche durch die zweite Versorgungsquelle 58 versorgt werden, vorgesehen, die die Drucksteuerventile 85, 86 in den Leitungen 20, 30 ansteuern, um die pneumatischen Steuerdrücke aus den Ausgängen 16, 17 des Moduls 18 elektronisch gesteuert zu modulieren. Diese Ausführungsform ermöglicht dadurch eine achsweise Modulation der Bremsdrücke durch Modulation der Steuerdrücke.

Die beschriebenen Ausführungsformen zeigen ein elektronisch gesteuertes Bremssystem, bzw. ein Modul und eine Vorrichtung, die in einer Rückfallebene pneumatische Steuer- und Bremsdrücke zur Verfügung stellen. Weitere Ausführungsformen sind denkbar, in denen Steuersignale und/oder Bremsdrücke hydraulisch ausgeprägt sind. In einer weiteren Ausführungsform sind auch mechanisch ausgeprägte Bremsbetätigungen und/oder Steuersignale vorgesehen. Weitere Ausführungsformen lassen sich durch Kombination der oben beschriebenen Ausführungsformen bilden. Weiterhin können Ausführungsformen gebildet werden indem bspw. die Druckspeicher 10, 11, 12 zusammengefasst werden, so dass bspw. die Vorrichtung 82 und das Modul 18 Druckluft aus lediglich einem Druckspeicher beziehen.

### BEZUGSZEICHENLISTE

- 1: Rad
- 2: Achse
- 3: Bremsscheibe
- 4: Bremsbelag
- 10: erster Druckspeicher (Druckluftquelle)
- 11: zweiter Druckspeicher (Druckluftquelle)
- 12: dritter Druckspeicher (Druckluftquelle)
- 13: Steuerleitung
- 14: Versorgungsleitung
- 15: Eingang Fußbremsmodul (Schnittstelle)
- 16: Ausgang Fußbremsmodul (Schnittstelle VA)
- 17: Ausgang Fußbremsmodul (Schnittstelle HA)
- 18: Fußbremsmodul (Modul)
- 19: Steuereingang Fußbremsmodul (Schnittstelle)
- 20: Steuerleitung
- 22: Druckregelmodul (Verarbeitungseinheit, einkanalig)
- 24: Trailermodul (Verarbeitungseinheit)
- 26: Leitung
- 27: Leitung
- 28: Drucksteuerventil (Modulator)
- 29: Leitung
- 30: Steuerleitung
- 32: Druckregelmodul (Verarbeitungseinheit, zweikanalig)
- 34: Leitung
- 40: EBS-Steuergerät (Steuervorrichtung)
- 50: Leitung
- 52: erste Versorgungsquelle
- 58: zweite Versorgungsquelle
- 80: Bremssystem
- 82: Vorrichtung
- 83: Eingang Vorrichtung (Schnittstelle)
- 84: Ausgang Vorrichtung (Schnittstelle)
- 85: Drucksteuerventil (Modulator)
- 86: Drucksteuerventil (Modulator)
- 87: Drucksteuerventil (Modulator)
- HAK: Hinterachskreis
- VAK: Vorderachskreis
- HA: Hinterachse
- VA: Vorderachse

## Patentansprüche

1. Elektronisches Bremssystem (80) für ein Fahrzeug mit mindestens zwei Achsen, insbesondere ein Nutzfahrzeug, aufweisend:
- mindestens eine Verarbeitungseinheit (22, 32), die dazu ausgebildet ist, aus nicht elektrischen Steuersignalen Bremsdrücke zur Betätigung einer Bremse zu erzeugen,
- mindestens einen nicht elektrischen, insbesondere pneumatischen, Kreis (VAK, HAK) zur Übertragung von Steuersignalen an die mindestens eine Verarbeitungseinheit (22, 32),
- mindestens einen Druckspeicher (10, 11, 12),
- Verarbeitungsmittel, die dazu ausgebildet sind, die Erzeugung der Bremsdrücke durch die Verarbeitungseinheiten (22, 32) elektronisch zu steuern, wobei
die Verarbeitungsmittel durch eine erste Versorgungsquelle (52) versorgt werden, und wobei
ein Modul (18) vorgesehen ist, das mit der mindestens einen Schnittstelle (15) mit dem mindestens einen Druckspeicher (10, 11, 12) fluidisch verbunden ist, und das über die mindestens eine Schnittstelle (16, 17) mit dem mindestens einen nicht elektrischen Kreis (VAK, HAK) fluidisch verbunden ist,
wobei das Modul (18), aufweist:
- mindestens eine Schnittstelle (15), die dazu ausgebildet ist, mit einem Druckspeicher (11, 12) verbunden zu werden,
- mindestens eine Schnittstelle (16, 17), die dazu ausgebildet ist, die nicht elektrischen Steuersignale an mindestens eine Verarbeitungseinheit (22, 24, 32), die dazu ausgebildet ist, aus diesen nicht elektrischen Steuersignalen Bremsdrücke zur Betätigung einer Bremse zu erzeugen, zu übermitteln,
**wobei ferner**
mindestens eine Schnittstelle (19) vorgesehen ist, die dazu ausgebildet ist, ein nicht elektrisches Steuersignal zu empfangen, wobei das Modul (18) dazu ausgebildet ist, aus diesem Steuersignal die nicht elektrischen Steuersignale für das Bremssystem (80) zu erzeugen;
wobei das elektronisches Bremssystem (80) ferner folgendes aufweist:
- mindestens eine Schnittstelle, die dazu ausgebildet ist, Raddrehzahlen mindestens eines Rades zu erfassen, **dadurch gekennzeichnet, dass**
das Bremssystem (80) dazu ausgebildet ist, die Erzeugung der Bremsdrücke unter Berücksichtigung der erfassten Raddrehzahlen, insbesondere durch die Verarbeitungsmittel, durchzuführen und weiterhin aufweisend
- Verarbeitungsmittel, welche durch die erste Versorgungsquelle (52) versorgt werden, und
- Verarbeitungsmittel, welche durch die zweite Versorgungsquelle (58) versorgt werden, wobei
beide Verarbeitungsmittel über die mindestens eine Schnittstelle Raddrehzahlen des mindestens eines Rades erfassen.

2. Elektronisches Bremssystem (80) nach Anspruch 1, wobei
jeweils eine Verarbeitungseinheit (22, 32) mit einem separaten nicht elektrischen Kreis (VAK, HAK) fluidisch verbunden ist, und
dazu ausgebildet ist, separat über die mindestens eine Schnittstelle (16, 17) des Moduls (18) angesteuert zu werden, wobei
eine Verarbeitungseinheit (22, 32) Bremsdrücke aus nicht elektrischen Steuersignalen des jeweiligen nicht elektrischen Kreises (VAK, HAK) für eine Achse (VA, HA) des Fahrzeugs erzeugt.

3. Elektronisches Bremssystem (80) nach Anspruch 1 oder 2, aufweisend:
- eine Verarbeitungseinheit (24), die dazu ausgebildet ist, aus nicht elektrischen Steuersignalen Bremsdrücke zur Betätigung einer Bremse mindestens eines Anhängers zu erzeugen, wobei
die Verarbeitungseinheit (24) mit einem nicht elektrischen Kreis (VAK, HAK), insbesondere einem pneumatischen Kreis, in Verbindung steht, welcher entweder ein separater Kreis ist, oder welcher mit mindestens einer weiteren Verarbeitungseinheit (22, 32) in Verbindung steht.

4. Elektronisches Bremssystem (80) nach einem der Ansprüche 1 bis 3, aufweisend:
- eine, insbesondere elektrische, zweite Versorgungsquelle (58),
- mindestens einen Modulator (85, 86, 87), der in mindestens einem nicht elektrischen Kreis vorgesehen ist und der dazu ausgebildet ist, das entsprechende nicht elektrische, insbesondere pneumatische, Steuersignal an die entsprechende Verarbeitungseinheit (22, 24, 32) zu modulieren, und/oder
- mindestens einen Modulator (28), der dazu ausgebildet ist, einen Bremsdruck einer Verarbeitungseinheit (22, 24, 32) an eine Bremse zu modulieren, wobei
die Modulatoren dazu ausgebildet sind sowohl durch ein Verarbeitungsmittel angesteuert zu werden, das durch die erste Versorgungsquelle (52) versorgt ist, als auch durch ein Verarbeitungsmittel angesteuert zu werden, das durch die zweite Versorgungsquelle (58) versorgt ist.

5. Elektronisches Bremssystem (80) nach Anspruch 4, aufweisend:
- eine Vorrichtung (82) nach einem der Ansprüche 1 bis 4, die mit ihrer mindestens einen Schnittstelle (84) mit der mindestens einen Schnittstelle (19) des Moduls (18) in Verbindung steht, und mit der mindestens einen Schnittstelle (83) mit einem Druckspeicher (10, 11, 12) in Verbindung steht, und/oder
- Verarbeitungsmittel, die dazu ausgebildet sind, die Steuerung der Vorrichtung (82) und/oder der Modulatoren (85, 86, 87, 28) elektronisch durchzuführen, wobei
die Vorrichtung (82) und/oder die Verarbeitungsmittel dazu ausgebildet sind, durch die weitere Versorgungsquelle (58) versorgt zu werden.

6. Elektronisches Bremssystem (80) nach einem der vorhergehenden Ansprüche, wobei das Modul (18) weiterhin aufweist:
- mindestens eine Schnittstelle, die dazu ausgebildet ist, einen Fahrerwunsch zu empfangen, wobei
das Modul (18) dazu ausgebildet ist, diesen Fahrerwunsch bei der Erzeugung der nicht elektrischen Steuersignale für das Bremssystem (80) zu berücksichtigen, und/oder
dazu ausgebildet ist, über die erste Versorgungsquelle (52) und/oder die zweite Versorgungsquelle (58) versorgt zu werden.

7. Elektronisches Bremssystem (80) nach einem der vorhergehenden Ansprüche, wobei das Modul (18) weiterhin aufweist::
- Verarbeitungsmittel, welche ebenfalls über die zweite Versorgungsquelle (58) versorgt werden, und die dazu ausgebildet sind, die Steuerung der Vorrichtung (82), und/oder des Moduls (18), und/oder des Bremssystems (80) durchzuführen, und/oder die in das Modul (18) integriert sind.

8. Elektronisches Bremssystem (80) nach einem der vorhergehenden Ansprüche, wobei das Modul (18) weiterhin aufweist::
- eine Vorrichtung (82) nach einem der Ansprüche 1 bis 4, wobei
die Schnittstelle (84) mit der Schnittstelle (19) des Moduls (18) zur Signalübertragung verbunden ist, und
die Vorrichtung (82) in das Modul (18) integriert, oder separat ausgebildet ist.

9. Elektronisches Bremssystem (80) nach Anspruch 8, wobei
bei integrierter Ausbildung die Schnittstelle (84) mit der Schnittstelle (19) identisch ist.

10. Elektronisches Bremssystem (80) nach einem der Ansprüche 7 bis 9, wobei
das Modul (18) dazu ausgebildet ist, in einem Normalfall elektronisch den Fahrerwunsch zu ermitteln und an eine Steuervorrichtung (40) weiterzugeben und zusätzlich nicht elektrische Steuersignale an mindestens eine Verarbeitungseinheit (22, 24, 32) zur Erzeugung von Bremsdrücken zu übermitteln, die jedoch nur im Fehlerfall genutzt werden.

11. Elektronisches Bremssystem (80) nach Anspruch 10, wobei
der Fehlerfall ein Ausfall einer Versorgung des Moduls (18), insbesondere durch die erste Versorgungsquelle (52), ist.

## Claims

1. Electronic brake system (80) for a vehicle with at least two axles, in particular a commercial vehicle, having:
- at least one processing unit (22, 32) which is configured to generate brake pressures for the actuation of a brake from non-electric control signals,
- at least one non-electric, in particular pneumatic, circuit (VAK, HAK) for the transmission of control signals to the at least one processing unit (22, 32),
- at least one pressure accumulator (10, 11, 12),
- processing means which are configured to electronically control the generation of the brake pressures by way of the processing units (22, 32),
the processing means being supplied by way of a first supply source (52), and
a module (18) being provided which is connected fluidically by way of the at least one interface (15) to the at least one pressure accumulator (10, 11, 12), and which is connected fluidically via the at least one interface (16, 17) to the at least one non-electric circuit (VAK, HAK),
the module (18) having
- at least one interface (15) which is configured to be connected to a pressure accumulator (11, 12),
- at least one interface (16, 17) which is configured to transmit the non-electric control signals to at least one processing unit (22, 24, 32) which is configured to generate brake pressures for the actuation of a brake from said non-electric control signals,
**furthermore**
at least one interface (19) being provided which is configured to receive a non-electric control signal, the module (18) being configured to generate the non-electric control signals for the brake system (80) from said control signal,
the electronic brake system (80) also having the following:
- at least one interface which is configured to detect wheel rotational speeds of at least one wheel, **characterized in that**
the brake system (80) is configured to carry out the generation of the brake pressures with consideration of the detected wheel rotational speeds, in particular by way of the processing means, and also having:
- processing means which are supplied by way of the first supply source (52), and
- processing means which are supplied by way of the second supply source (58),
the two processing means detecting wheel rotational speeds of the at least one wheel via the at least one interface.

2. Electronic brake system (80) according to Claim 1,
in each case one processing unit (22, 32) being connected fluidically to a separate non-electric circuit (VAK, HAK), and
being configured to be actuated separately via the at least one interface (16, 17) of the module (18),
a processing unit (22, 32) generating brake pressures from non-electric control signals of the respective non-electric circuit (VAK, HAK) for an axle (VA, HA) of the vehicle.

3. Electronic brake system (80) according to Claim 1 or 2, having:
- a processing unit (24) which is configured to generate brake pressures for the actuation of a brake of at least one trailer from non-electric control signals,
the processing unit (24) being connected to a non-electric circuit (VAK, HAK), in particular a pneumatic circuit, which is either a separate circuit or which is connected to at least one further processing unit (22, 32) .

4. Electronic brake system (80) according to one of Claims 1 to 3, having:
- a second supply source (58) which is, in particular, electric,
- at least one modulator (85, 86, 87) which is provided in at least one non-electric circuit, and which is configured to modulate the corresponding non-electric, in particular pneumatic, control signal to the corresponding processing unit (22, 24, 32), and/or
- at least one modulator (28) which is configured to modulate a brake pressure of a processing unit (22, 24, 32) to a brake,
the modulators being configured both to be actuated by way of a processing means which is supplied by way of the first supply source (52), and to be actuated by way of a processing means which is supplied by way of the second supply source (58).

5. Electronic brake system (80) according to Claim 4, having:
- an apparatus (82) according to one of Claims 1 to 4 which is connected by way of its at least one interface (84) to the at least one interface (19) of the module (18), and is connected by way of the at least one interface (83) to a pressure accumulator (10, 11, 12), and/or
- processing means which are configured to electronically carry out the control operation of the apparatus (82) and/or the modulators (85, 86, 87, 28),
the apparatus (82) and/or the processing means being configured to be supplied by way of the further supply source (58).

6. Electronic brake system (80) according to one of the preceding claims, the module (18) having, furthermore:
- at least one interface which is configured to receive a driver's request,
the module (18) being configured to take said driver's request into consideration in the case of the generation of the non-electric control signals for the brake system (80), and/or
being configured to be supplied via the first supply source (52) and/or the second supply source (58).

7. Electronic brake system (80) according to one of the preceding claims, the module (18) having, furthermore:
- processing means which are likewise supplied via the second supply source (58), and which are configured to carry out the control operation of the apparatus (82), and/or of the module (18), and/or of the brake system (80), and/or which are integrated into the module (18).

8. Electronic brake system (80) according to one of the preceding claims, the module (18) having, furthermore:
- an apparatus (82) according to one of Claims 1 to 4,
the interface (84) being connected to the interface (19) of the module (18) for the transmission of signals, and
the apparatus (82) being configured so as to be integrated into the module (18) or so as to be separate.

9. Electronic brake system (80) according to Claim 8,
the interface (84) being identical to the interface (19) in the case of an integrated configuration.

10. Electronic brake system (80) according to one of Claims 7 to 9,
the module (18) being configured, in a normal case, to determine the driver's request electronically, to forward it to a control apparatus (40), and to additionally transmit non-electric control signals to at least one processing unit (22, 24, 32) for the generation of brake pressures which however are only used in the case of a fault.

11. Electronic brake system (80) according to Claim 10,
the case of a fault being a failure of a supply of the module (18), in particular by way of the first supply source (52).

## Revendications

1. Système (80) électronique de freinage d'un véhicule ayant au moins deux essieux, en particulier d'un véhicule utilitaire, comportant :
- au moins une unité (22, 32) de traitement, qui est constituée pour produire, à partir de signaux de commande, qui ne sont pas électriques, des pressions de commande pour l'actionnement d'un frein,
- au moins un circuit (VAK, HAK), qui n'est pas électrique, en étant en particulier pneumatique, de transmission de signaux de commande à la au moins une unité (22, 32) de traitement,
- au moins un accumulateur (10, 11, 12) de pression,
- des moyens de traitement, qui sont constitués pour commander électroniquement la production des pressions de frein par les unités (22, 32) de traitement, dans lequel
les moyens de traitement sont alimentés par une première source (52) d'alimentation, et dans lequel
il est prévu un modèle (18), qui communique fluidiquement par la au moins une interface (15) avec le au moins un accumulateur (10, 11, 12) de pression et qui communique fluidiquement par la au moins une interface (16, 17) avec le au moins un circuit (VAK, HAK), qui n'est pas électrique,
dans lequel le module (18), comporte :
- au moins une interface (15), qui est constituée pour être reliée à un accumulateur (11, 12) de pression,
- au moins une interface (16, 17), qui est constituée pour transmettre des signaux de commande, qui ne sont pas électriques, à au moins une unité (22, 24, 32) de traitement, qui est constituée pour produire, à partir de ces signaux de commande, qui ne sont pas électriques, des pressions de frein pour l'actionnement d'un frein,
**dans lequel en outre**
il est prévu au moins une interface (19), qui est constituée pour recevoir un signal de commande, qui n'est pas électrique, dans lequel le module (18) est constitué pour produire, à partir de ce signal de commande, les signaux de commande du système (80) de freinage, qui ne sont pas électriques,
dans lequel le système (80) électronique de freinage comporte en outre ce qui suit :
- au moins une interface, qui est constituée pour détecter des vitesses de rotation d'au moins une roue, **caractérisé en ce que**
le système (80) de freinage est constitué pour effectuer la production des pressions de frein en prenant en compte les vitesses de rotation de roue détectées, en particulier par les moyens de traitement, et comportant en outre :
- des moyens de traitement, qui sont alimentés par la première source (52) d'alimentation, et
- des moyens de traitement, qui sont alimentés par la deuxième source (58) d'alimentation, dans lequel
les deux moyens de traitement détectent, par la au moins une interface, des vitesses de rotation de la au moins une roue.

2. Système (80) électronique de freinage suivant la revendication 1, dans lequel
respectivement une unité (22, 32) de traitement communique fluidiquement avec un circuit (VAK, HAK) distinct, qui n'est pas électrique, et
est constituée pour être commandée séparément par la au moins une interface (16, 17) du module (18), dans lequel
une unité (22, 32) de traitement produit des pressions de frein à partir de signaux de commande, qui ne sont pas électriques, du circuit (VAK, HAK) respectif, qui n'est pas électrique, d'un essieu (VA, HA) du véhicule.

3. Système (80) électronique de freinage suivant la revendication 1 ou 2, comportant :
- une unité (24) de traitement, qui est constituée pour produire, à partir de signaux de commande, qui ne sont pas électriques, des pressions de frein pour l'actionnement d'un frein d'au moins une remorque, dans lequel
l'unité (24) de traitement est en liaison avec un circuit (VAK, HAK), qui n'est pas électrique, en étant en particulier un circuit pneumatique, qui ou bien est un circuit distinct ou bien est un circuit, qui est en liaison avec au moins une autre unité (22, 32) de traitement.

4. Système (80) électronique de freinage suivant l'une des revendications 1 à 3, comportant :
- une deuxième source (58) d'alimentation, en particulier électrique,
- au moins un modulateur (85, 86, 87), qui est prévu dans au moins un circuit, qui n'est pas électrique et qui est constitué pour moduler le signal de commande correspondant, qui n'est pas électrique, en étant en particulier pneumatique, sur l'unité (22, 24, 32) correspondante de traitement, et/ou
- au moins un modulateur (28), qui est constitué pour moduler une pression de frein d'une unité (22, 24, 32) de traitement sur un frein, dans lequel
les modulateurs sont constitués pour être commandés aussi bien par un moyen de traitement, qui est alimenté par la première source (52) d'alimentation, que pour être commandés également par un moyen de traitement, qui est alimenté par la deuxième source (58) d'alimentation.

5. Système (80) électronique de freinage suivant la revendication 4, comportant :
- un dispositif (82) suivant l'une des revendications 1 à 4, qui est en liaison par sa au moins une interface (84) avec la au moins une interface (19) du module (18) et qui est en liaison par la au moins une interface (83) avec un accumulateur (10, 11, 12) de pression, et/ou
- des moyens de traitement, qui sont constitués pour effectuer électroniquement la commande du dispositif (82) et/ou des modulateurs (85, 86, 87, 28), dans lequel
le dispositif (82) et/ou les moyens de traitement sont constitués pour être alimentés par l'autre source (58) d'alimentation.

6. Système (80) électronique de freinage suivant l'une des revendications précédentes, dans lequel le module (18) comporte en outre :
- au moins une interface, qui est constituée pour recevoir un souhait du conducteur, dans lequel
le module (18) est constitué pour prendre en compte ce souhait du conducteur, lors de la production des signaux de commande du système (80) de frein, qui ne sont pas électriques, et/ou
est constitué pour être alimenté par la première source (52) d'alimentation et/ou la deuxième source (58) d'alimentation.

7. Système (80) électronique de freinage suivant l'une des revendications précédentes, dans lequel le module (18) comporte en outre :
- des moyens de traitement, qui sont alimentés également par la deuxième source (58) d'alimentation et qui sont constitués pour effectuer la commande du dispositif (82) et/ou du module (18) et/ou du système (80) de freinage et/ou qui sont intégrés dans le module (18).

8. Système (80) électronique de freinage suivant l'une des revendications précédentes, dans lequel le module (18) comporte en outre :
- un dispositif (82) suivant l'une des revendications 1 à 4, dans lequel
l'interface (84) est reliée à l'interface (19) du module (18) pour la transmission du signal, et
le dispositif (82) est intégré dans le module (18) ou est constitué d'une manière distincte.

9. Système (80) électronique de freinage suivant la revendication 8, dans lequel,
si la constitution est intégrée, l'interface (84) est la même que l'interface (19).

10. Système (80) électronique de freinage suivant l'une des revendications 7 à 9, dans lequel
le module (18) est constitué pour déterminer, dans un cas normal, électroniquement, le souhait du conducteur et le donner à un dispositif (40) de commande et en outre pour transmettre des signaux de commande, qui ne sont pas électriques, à au moins une unité (22, 24, 32) de traitement pour la production de pressions de frein, qui toutefois ne sont utilisées qu'en cas de défaut.

11. Système (80) électronique de freinage suivant la revendication 10, dans lequel
le cas de défaut est une défaillance d'une alimentation du module (18), en particulier par la première source (52) d'alimentation.
